## Europäisches Patentamt
## European Patent Office
## Office européen des brevets

(11) Veröffentlichungsnummer: **0 151 281**
**B1**

(12) # EUROPÄISCHE PATENTSCHRIFT

(45) Veröffentlichungstag der Patentschrift:
22.06.88

(51) Int. Cl.⁴: **H 04 B 1/30,** H 04 Q 7/04

(21) Anmeldenummer: **84115460.2**

(22) Anmeldetag: **14.12.84**

(54) **Digitales Zellenfunksystem mit Zeitmultiplex.**

(30) Priorität: **03.02.84 DE 3403714**

(43) Veröffentlichungstag der Anmeldung:
**14.08.85 Patentblatt 85/33**

(45) Bekanntmachung des Hinweises auf die Patenterteilung:
**22.06.88 Patentblatt 88/25**

(84) Benannte Vertragsstaaten:
**DE FR GB IT**

(56) Entgegenhaltungen:
EP - A - 0 064 686
GB - A - 2 063 629

IEEE SPECTRUM, Band 20, Nr. 6, Juni 1983, Seiten 30-37, NEW YORK, (US). G.R. COOPER et al.: "Cellular mobile technology: the great multiplier".
PROCEEDINGS OF 1980 INTERNATIONAL ZÜRICH SEMINAR ON DIGITAL COMMUNICATIONS 4.-6. März 1980, Abschnitt C.2, IEEE, NEW YORK, (US). D.R. CONN et al.: "User density for 800 Mhz microwave mobile radiotelephone communications".
THE RADIO AND ELECTRONIC ENGINEER, Band 49, Nr. 5, Mai 1979, Seiten 231-235, LONDON, (GB) W. GOSLING et al.: "Receivers for the Wolfson single-sideband v.h.f. land mobile radio system".
FUNKSCHAU; Band 44, Nr. 14, Juli 1972, Seiten 485-488,

(56) Entgegenhaltungen: (Fortsetzung)
MÜNCHEN, (DE). H. SPIELER:
"Einseitenband-Rundfunkempfänger mit ungewöhnlichen Eigenschaften".
NACHRICHTENTECHNIK, BAND II:
Nachrichtenübertragung, 1982, Seiten 122, 126, 127.

(73) Patentinhaber: **Licentia Patent-Verwaltungs-GmbH, Theodor-Stern-Kai 1, D-6000 Frankfurt/Main 70 (DE)**

(72) Erfinder: **Schaller, Wolfgang, Dr. Ing., Am Roten Berg 51, D-7900 Ulm (DE)**

(74) Vertreter: **Schulze, Harald Rudolf, Dipl.-Ing. et al, Licentia Patent-Verwaltungs-GmbH Theodor-Stern-Kai 1, D-6000 Frankfurt/Main 70 (DE)**

## Beschreibung

Die Erfindung betrifft ein digitales Zellenfunksystem nach dem Oberbegriff des Auspruchs 1, wie es aus der DE-A-31 18 018 (EP-A-0064686) bekannt ist.

Zellenfunksysteme, z.B. für den öffentlichen beweglichen Landfunk, benötigen für die Funkübertragung zwischen den mobilen Teilnehmern und den Feststationen je nach Verkehrsaufkommen eine grössere Zahl von Kanälen pro Feststation. Bei den herkömmlichen realisierten Verfahren sind dies Frequenzkanäle (FDMA). In der DE-A-31 18 018 wurde ein Zeitmultiplexverfahren (TDMA) vorgeschlagen, so dass an die Stelle der Frequenzkanäle Zeitkanäle (Zeitschlitze) zur Übertragung der verschiedenen gleichzeitigen Gespräche treten. Die Übertragung im Zeitschlitz erfolgt digital mit einem orthogonalen Zeichensatz. Damit ist eine Spektrumsverbreiterung verbunden (Spreizung). Diese ermöglicht es, mit Hilfe vom Empfangskorrelatoren für die einzelnen Zeichen des Zeichensatzes eine zeitliche Auflösung der einzelnen Wellen im Mehrwegeempfangsfeld zu erreichen und dadurch die Intersymbolinterferenz trotz hoher Übertragungsrate zu vermeiden. Weitere Einzelheiten können der zitierten Offenlegungsschrift entnommen werden.

Das TDMA-Verfahren erfordert wegen der zusätzlichen Spektrumsspreizung eine erhebliche HF-Bandbreite. Der Spektrumsbedarf soll aber aus Gründen der Frequenzökonomie nicht grösser sein als bei herkömmlichen FDMA-Systemen. Dabei kommt es in erster Linie nicht auf die Halbwertsbreite (3dB-Bandbreite) des Sendespektrums, sondern auf die gesamte Breite der Emission an, bis herab zu einer spektralen Leistungsdichte, die andere Funkdienste nicht mehr stört.

Bei Schmalbandübertragungsverfahren sind besondere bandbreitesparende Modulationsverfahren der Gattung CPFSK (Continuous Phase FSK) entwickelt worden, die durch geeignete Sendesignalformung einen steilen Abfall des Sendespektrums jenseits der Halbwertsbreite erreichen. Diese Verfahren erfordern digitale Prozessoren zur Signalformung. Wegen einer endlichen Rechengeschwindigkeit sind die CPFSK-Verfahren heute noch nicht für Breitbandmodulation geeignet.

Ferner ist aus den Proceedings of 1980 International Zurich Seminar on Digital Communications (März 1980), Abschnitt C.2, Seiten C2.1 bis C2.3 bekannt, für die Funkübertragung in einem Funksystem mit ortsfesten Sende/Empfangsstationen ein Einseitenbandverfahren in Verbindung mit einer PSK-Modulation zu verwenden. Darüber hinaus ist allgemein bekannt, dass mit Hilfe des Restseitenbandverfahrens Bandbreite eingespart werden kann.

Das Sendespektrum kann im Prinzip auch durch sehr steilflankige Filter begrenzt werden, um zu frequenzökonomischen Verhältnissen zu gelangen. Diese "brute force"-Methode ist aber sehr aufwendig, da die Sendefilter hinter der Endstufe angeordnet und daher sehr dämpfungsarm sein müssen. Im 900 MHz Band, welches für einen zukünftigen Zellenfunk vorgesehen ist, wären Topfkreise untragbarer Ausmasse erforderlich. Wünschenswert wäre ein Verfahren, das mit einfachen Filtern einen frequenzökonomischen Betrieb gestattet.

Aufgabe der Erfindung ist es daher, ein digitales Zellenfunksystem der eingangs genannten Art so zu erweitern, dass eine gegebene Bitrate mit minimaler Bandbreite übertragen werden kann.

Die Erfindung ist im Patentanspruch 1 gekennzeichnet. Die weiteren Ansprüche beinhalten vorteilhafte Weiterbildungen bzw. Ausbildungen der Erfindung.

Die Erfindung wird im folgenden anhand der Figuren näher erläutert.

Gemäss der Erfindung wird vorgeschlagen, für den Funkverkehr ein Restseitenbandverfahren mit unterdrücktem Träger in Verbindung mit einer PSK-Modulation zu verwenden und die dadurch entstehenden Zusatzaufwendungen bei den Empfängerstationen in den ohnehin erforderlichen Digitalteil der Funkgeräte zu verschieben.

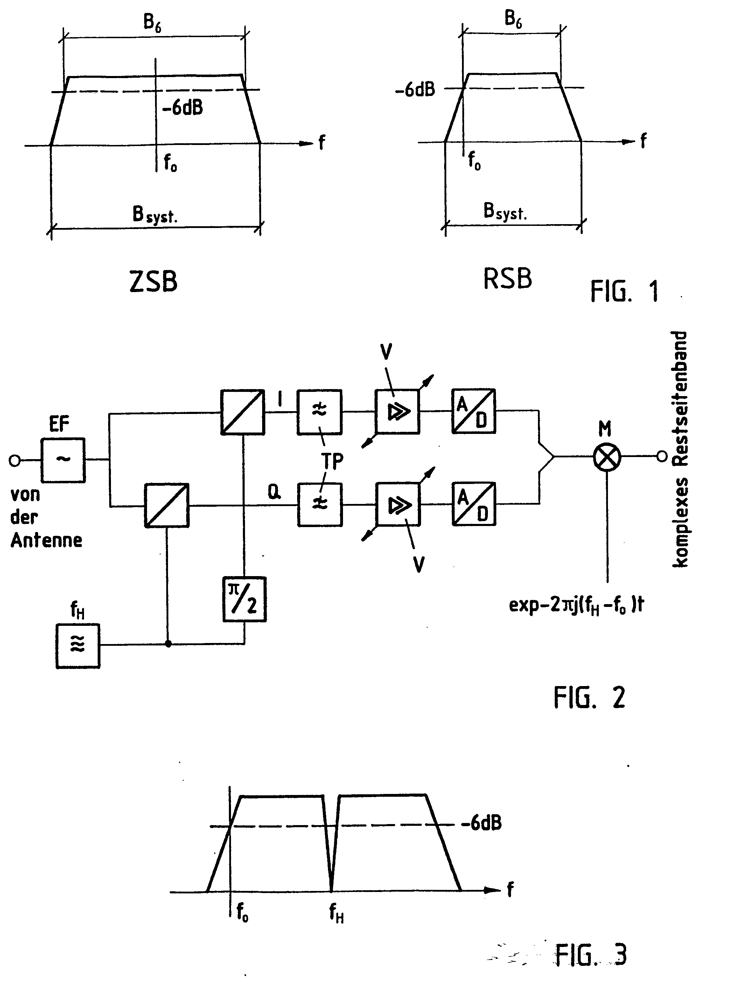

Durch die Restseitenbandmodulation (RSB) wird die benötigte Bandbreite gegenüber der Zweiseitenbandmodulation (ZSB) halbiert (FIG.1). Diese Entlastung kann zu Teilen der Frequenzökonomie zugute kommen, und zu Teilen der Reduzierung der Ansprüche an den Formfaktor ($B_{syst.}$ / $B_6$) des Sendefilters. $B_6$ beyeichnet die 6dB-Bandbreite des Filters.

PSK-Modulationen (2 PSK und 4 PSK) gehören zu den linearen Modulationsverfahren, die für den Korrelationsempfang Voraussetzung sind. Die ebenfalls lineare Amplitudenmodulation geht im Falle digitaler Modulationssignale und unterdrücktem Träger in PSK-Modulation über.

Die Sendestationen zeigen infolge des Übergangs von der Zweiseitenbandmodulation zur Restseitenbandmodulation keine Besonderheiten und sind daher nicht dargestellt. Das Filter zur Begrenzung des Modulationsspektrums hinter dem Modulator erhält lediglich eine andere Bandbreite und Mittenabstimmung als bei der ZSB. Die Sendeendstufe muss als Linearverstärker ausgeführt sein. Diese Massnahme ist aber auch bei linearer Zweiseitenbandmodulation nicht zu umgehen, bedeutet also keinen zusätzlichen Aufwand.

Das Schema einer erfindungsgemässen Empfangsstation zeigt FIG. 2. Gemäss dem Homodynprinzip wird das Empfangsband auf eine Zwischenfrequenz von Null abgemischt und mit Tiefpässen TP selektiert. Zur Erhaltung der Eindeutigkeit des Signals muss der Zwischenfrequenzverstärker zweikanalig ausgelegt werden. Die beiden Kanäle I (In-phase) und Q (Quadrature) müssen hinreichend gleichen Amplituden- und Phasengang aufweisen. Ein Fehler von 1... 2dB und 10... 20° verursacht einen noch akzeptablen Klirrfaktor.

Die Besonderheit der erfindungsgemässen Empfangsstation besteht darin, dass nicht mit der Trägerfrequenz $f_0$ abgemischt wird, sondern mit einer Hilfsfrequenz $f_H = f_0 - B_6/2$, wobei $B_6$ die 6dB-Bandbreite des Empfängers ist. Daher wird das Restseitenbandsignal zunächst wie ein Zweiseitenbandsignal mit einem entsprechend einfachen analogen Empfängerteil empfangen. Hinter den ZF-Filtern TP erst werden beide Quadraturkanäle in Analog/Digital-Wandlern A/D digitalisiert. Die Korrektur der Seitenbandlage erfolgt erst im digitalen Teil durch einseitige Frequenzverschiebung um $f_H - f_0$ vermittels einer komplexen Multiplikation M mit einem Drehzeiger exp $[-2\pi j$ $(f_H-f_0)t]$. Diese Funktion wird im digitalen Signalprozessor des Funkgeräts erzeugt.

Die weitere Signalverarbeitung kann danach sinngemäss wie bei dem bekannten TDMA-Verfahren erfolgen. An die Stelle der reellen Signale tritt das sogenannte analytische Signal mit dem gleichen Informationsgehalt. Wegen der damit nötigen komplexen Verarbeitung kann die Auswertung sinnvoll nur noch in digitalen Prozessoren durchgeführt werden.

Das dargestellte Empfängerkonzept ist integrationsfreundlich. Die ZF-Tiefpässe TP können vorteilhaft als aktive RC-Filter realisiert werden. Die ZF-Verstärker V sind im Prinzip Gleichspannungsverstärker. Um die bei hoher Verstärkung problematische Nullpunktdrift auszuschalten, werden ihre Stufen vorzugsweise Kondensator-gekoppelt. Dadurch entsteht im Empfangsband um $f_H$ herum ein schmales Loch der Breite einiger hundert Hertz, vgl. FIG. 3. Die Demodulation des Signals wird dadurch nicht merklich gestört.

Eine automatische Pegelregelung der beiden Verstärkerkanäle engt die Signaldynamik auf den Aussteuerbereich der A/D-Wandler ein. Der Gleichlauf darf durch die Regelung nicht verlorengehen. Dies wird zweckmässigerweise dadurch erreicht, dass beide Verstärker V unabhängig voneinander auf gleichen konstanten Ausganspegel ausgeregelt werden. Die Regelgrenzfrequenz muss um mehrere Zehnerpotenzen unter der Signalbandbreite liegen. Dies kann in einem TDMA-System eine getastete Regelung des empfangenen Zeitschlitzes erforderlich machen. Da die mittleren Eingangspegel der beiden Quadraturkanäle I und Q gleich sind, müssen dann auch die Verstärkungen gleich sein. Ein nicht mehr störender Restfehler bleibt dadurch, dass die über die Dauer der Regelzeitkonstante betrachteten Kurzzeitmittelwerte der Eingangssignale gegeneinander schwanken, da es sich um unabhängige Zufallsprozesse handelt. Die relative Schwankung liegt bei $1/\sqrt{N}$, wenn N das Verhältnis aus Signalbandbreite zu Regelbandbreite ist.

## Patentansprüche

1. Digitals Zellenfunksystem mit ortsfesten Sende/Empfangsstationen und mit beweglichen Sende/Empfangsstationen, die über Funk im Zeitmultiplex mit Vielfachzugriff mit den ortsfesten Stationen Nachrichten austauschen können, wobei mehrere ortsfeste Stationen von einer Leitstelle gesteuert werden, von denen wiederum mehrere mit einer Überleiteinrichtung zu einem Fernsprechwählnetz verbunden sind, dadurch gekennzeichnet, dass die Sende/Empfangsstationen für den Funkverkehr mit einem Restseitenbandverfahren mit unterdrücktem Träger der Frequenz $f_0$ in Verbindung mit einer PSK-Modulation eingerichtet sind, dass die Empfangsstationen einen analogen Quadratur-Eingangsteil aufweisen, in welchem das Empfangsband mit einer Hilfsfrequenz $f_H = f_0 - B_6/2$ auf eine Zwischenfrequenz von Null abgemischt und mit Tiefpässen (TP) selektiert wird, wobei mit $B_6$ die 6dB-Bandbreite des Empfängers bezeichnet ist, dass sich an den analogen Eingangsteil Analog/Digital-Wandler (A/D) für beide Quadraturkanäle anschliessen und dass die digitalisierten Signale eine einseitige Frequenzverschiebung um $f_H - f_0$ erfahren durch komplexe Multiplikation (M) mit einem Drehzeiger der Grösse exp $[-2\pi j(f_H-f_0)t]$.

2. Digitales Zellenfunksystem nach Anspruch 1, dadurch gekennzeichnet, dass die Tiefpässe (TP) als aktive RC-Filter realisiert sind.

3. Digitales Zelllenfunksystem nach Anspruch 1, dadurch gekennzeichnet, dass als ZF-Verstärker (V) Breitbandverstärker mit tiefer unterer Grenzfrequenz vorgesehen sind.

4. Digitales Zellenfunksystem nach Anspruch 3, dadurch gekennzeichnet, dass die ZF-Verstärker (V) mittels einer automatischen Pegelregelung in der Signaldynamik auf den Aussteuerbereich der Analog/Digital-Wandler (A/D) regelbar sind.

5. Digitales Zellenfunksystem nach Anspruch 4, dadurch gekennzeichnet, dass die ZF-Verstärker (V) unabhängig voneinander auf gleichen konstanten Ausganspegel regelbar sind.

## Claims

1. Digital cellular radio system with fixed transmitting-receiving stations and with mobile transmitting-receiving stations which can exchange communications with the fixed stations by radio in time division multiplex with multiple access, wherein several fixed stations are controlled from one master station, of which in turn several are connected by relay station with a telephone dialling network, characterised thereby, that the transmitting-receiving stations are equipped for the radio traffic by a residual side band method with suppressed carrier of the frequency $f_0$ in conjunction with a PAK modulation, that the receiving stations display an analog quadrature input part, in which the reception band is mixed with an auxiliary frequency $f_H = f_0 - B_6/2$ to an intermediate frequency of zero and selected by low-pass filters (TP), wherein the 6dB-bandwidth of the receiver is designated by $B_6$, that analog-to-digital converters (A/D) for both quadrature channels follow the analog input part and that the digitalised signals experience a one-sided frequency shift through $f_H - f_0$ through complex multiplication (M) with a rotary vector of the magnitude exp$[-2\pi j(f_H-f_0)t]$.

2. Digital cellular radio system according to claim 1, characterised thereby, that the low-pass filters (TP) are realised as active RC filters.

3. Digital cellular radio system according to claim 1, characterised thereby, that wideband amplifiers with low lower limit frequency are provided as intermediate frequency amplifiers (V).

4. Digital cellular radio system according to claim 3, characterised thereby, that the intermediate frequency amplifiers (V) are regulable to the dynamic range of the analog-to-digital converters (A/D) by means of an automatic level regulation in the dynamic signal range.

5. Digital cellular radio system according to claim 4, characterised thereby, that the intermediate frequency amplifiers (V) are regulable one independently of the other to equal constant output level.

## Revendications

1. Système numérique de radio cellulaire avec des stations d'émission/réception fixes et des stations d'émission/réception mobiles qui peuvent échanger des messages avec les stations fixes par radio en multiplex temporel avec accès multiples, plusieurs stations fixes étant commandées par un centre directeur, plusieurs centres directeurs étant reliés par un dispositif de transfert à un réseau téléphonique automatique, ledit système étant caractérisé en ce que les stations d'émission/réception sont équipées pour la radiocommunication par un procédé à bande latérale résiduelle et porteuse supprimée de fréquence $f_0$ en liaison avec une modulation à saut de phase; les stations de réception comportent une partie d'entrée analogique en quadrature, dans laquelle la bande reçue est mélangée avec une fréquence auxiliaire $f_H = f_0 - B_6/2$ à une fréquence intermédiaire nulle, puis sélectée par des passebas (PB), $B_6$ étant la largeur de bande à 6 dB du récepteur; des convertisseurs analogique/numérique (A/N) sont reliés aux deux canaux en quadrature de la partie d'entrée analogique; et les signaux numérisés subissent un décalage unilatéral de fréquence de $f_H - f_0$ par une multiplication complexe (M) avec un vecteur tournant de module exp $[-2\pi j(f_H - f_0)t]$.

2. Système numérique de radio cellulaire selon revendication 1, caractérisé en ce que les passebas (PB) sont réalisés sous forme de filtres RC actifs.

3. Système numérique de radio cellulaire selon revendication 1, caractérisé par l'emploi d'amplificateurs à large bande et fréquence limite inférieure basse comme amplificateurs FI (V).

4. Système numérique de radio cellulaire selon revendication 3, caractérisé en ce qu'une commande automatique de niveau permet de régler la dynamique du signal des amplificateurs FI (V) à la plage de modulation des convertisseurs analogique/numérique (A/N).

5. Système numérique de radio cellulaire selon revendication 4, caractérisé en ce que les amplificateurs FI (V) sont réglables indépendamment au même niveau de sortie constant.

ZSB                    RSB                FIG. 1

FIG. 2

FIG. 3